# EUROPEAN PATENT APPLICATION

(11) **EP 4 733 728 A1**
(43) Date of publication of application: **29.04.2026**
(21) Application number: 24208444.0
(22) Date of filing: 23.10.2024
(51) Int. Cl.: G01L 1/26, G01L 5/00, G01L 5/22, G01L 25/00, G01G 3/14, G01G 23/00, G01G 23/06

(54) **FORCE AND TORQUE SENSOR ASSEMBLIES**

(71) Applicant: ECOLE POLYTECHNIQUE FEDERALE DE LAUSANNE (EPFL), 1015 Lausanne (CH)
(72) Inventor: HENEIN, Simon, 2000 Neuchâtel (CH); SCHNEEGANS, Hubert, 2024 St-Aubin Sauges (CH); TISSOT-DAGUETTE, Loïc, 1400 Yverdon-les-Bains (CH); COSANDIER, Florent, 2300 La Chaux-de-Fonds (CH); BAUR, Charles, 2024 St-Aubin Sauges (CH); KHOUEIRY, Ralph, 1024 Ecublens (CH)
(74) Representative: e-Patent SA

(57) **Abstract**

A first aspect of the invention relates to a force sensor assembly (1) comprising:
- a support (3) adapted to be attached to a frame (5);
- a force sensor (9) attached at a proximal end to said support (3) and adapted to deform in response to a force along a measurement axis (2);
- an end effector (11) attached at a distal end of said force sensor (9) and adapted to come into contact with a test piece, said end effector (11) having a mass (m);
- a compensating system (13) comprising a counterweight (15) having a counterweight mass (*m_{c}*) supported by said support (3) and linked to said end effector (11) by at least one lever (17) pivotally mounted on said support (3) at a pivot point (19) intermediate between said counterweight (15) and a point at which said lever (17) is connected to said end effector (11), said compensating system (13) being arranged such that, when said end effector (11) and said counterweight (15) are subjected to an acceleration (*g, a*) parallel to said measurement axis (2), the effect of said acceleration (*g*, *a*) on said counterweight (15) applies a compensating force to said end effector (11) that is substantially of equal magnitude and opposite direction to the force applied by said acceleration (*g*, *a*) directly to said end effector (11).

A second aspect of the invention relates to a torque sensor assembly (31) that functions analogosly.

## Description

### Technical field

The present invention relates to the field of force and torque sensors. More particularly, it relates to torque or force sensor provided with a compensating system arranged to compensate accelerations that may affect measurements.

### State of the Art

In many situations, force and torque sensors are exposed to accelerations, which may influence the measured force or torque and hence give an erroneous reading compared to the true value.

For instance, in automated assembly processes, it is crucial to assess if specific assembly operations have been correctly performed (e.g., pin insertion, clipping, screwing a bottle cap or similar). One way to ensure this is by using force or torque sensors during these operations and analysing the contact force/torque profiles to confirm the operation's success. Sometimes, the sensors are directly integrated onto a motorized axis. Typically, the force or torque sensors are placed between the actuator and the tool used for the assembly action. As a result, a significant mass is often attached downstream of the sensors. This significant mass, when the motorized axis is set into motion, may create significant forces or torques which disturbs the reading of the sensor. Today's solutions either ignore these inertial effects, at the cost of a loss of load cell information, or compensate for them in software, which requires a great deal of modelling and calibration.

Gravity is a static acceleration that can interfere with contact force measurements by generating a gravitational force. When a significant mass is attached downstream of a force sensor, the sensor will measure the weight of the mass it carries in addition to the contact forces during a contact phase. This gravitational force is usually cancelled out by performing a tare operation on the force sensor. However, if the orientation of the force sensor changes relative to gravity (e.g., the sensor is mounted on an axis rotating perpendicular to gravity), this tare operation becomes ineffective. As a result, axes with force sensors typically perform contact force measurements with a single, fixed orientation, which can limit the types of applications and the flexibility of operations. In essence, with current solutions it is difficult, if not impossible, to mount the sensor on a multiple degree of freedom arm which change the orientation of the sensor with respect to gravity, without having to re-tare the sensor for each orientation used for measurement, or limiting the measurement to a single orientation of the arm.

Similarly, when the force sensor undergoes translational acceleration (e.g., the sensor is mounted on a translating axis), an inertial force proportional to the sensor's linear acceleration will be measured, thereby disturbing the measurement. During contact force measurements involving translational movements of the force sensors, the preferred approach is to conduct these measurements at a constant linear velocity. This choice of maintaining a constant linear velocity during contact force measurement phases limits the reduction of cycle times, e.g. in rapid in-line manufacturing situations.

Likewise, when a torque sensor is subjected to angular acceleration (e.g., the sensor is mounted on a rotating axis), an inertial force proportional to the sensor's angular acceleration will be measured, thereby disturbing the measurement. During contact force measurements involving rotational movements of the torque sensors, the preferred approach is to conduct these measurements at a constant angular velocity. Again, this choice of maintaining a constant angular velocity during contact force measurement phases limits the reduction of cycle times, e.g. in rapid in-line manufacturing situations.

The aim of the invention is hence to at least partially overcome the above-mentioned drawbacks of the prior art.

### Disclosure of the Invention

More precisely, this aim is attained in a first aspect of the invention by a force sensor assembly as defined in a first independent claim. This force sensor assembly comprises:
- a support adapted to be attached directly or indirectly to a frame;
- a force sensor attached at a proximal end to said support and adapted to deform in response to a force applied along a measurement axis;
- an end effector attached at a distal end of said sensor and adapted to come into contact with a test piece, said end effector having a mass and being formed so as to be able to interact with the test piece in a desired manner, e.g. comprising a probe surface, gripper, friction surface or similar;
- a compensating system comprising a counterweight having a counterweight mass supported directly or indirectly by said support and linked to said end effector by at least one lever pivotally mounted directly or indirectly on said support at a pivot point intermediate between said counterweight and a point at which said lever is connected directly or indirectly to said end effector, said compensating system being arranged such that, when said end effector and said counterweight are subjected to an acceleration parallel to (i.e. with at least a component parallel to) said measurement axis, the effect of said acceleration on said counterweight applies a compensating force to said end effector that is of substantially equal magnitude and opposite direction to the force applied by said acceleration directly to said end effector.

The effect of an acceleration, whether it is due to gravity or due to motion of the support and/or of the frame, on the end effector is hence cancelled out, and accelerations with a component parallel to the measurement axis hence have substantially no effect on the force measured by the force sensor. The force sensor assembly can hence be used in a situation where its orientation with respect to the gravity vector is not constant and/or when the assembly is being displaced so as to generate linear accelerations, without having to carry out repeated tare operations and/or to compensate for the accelerations via complex modelling and calibration.

Advantageously, said lever is pivotally mounted on an extension fixed to said support, said extension being e.g. a beam, a rod or similar.

Advantageously, said lever is pivotally mounted on said extension by at least one flexure pivot, preferably a crossed blade flexure pivot. Furthermore, said lever may be connected to said end effector by at least one blade flexure. Such arrangements are simple, require few components, and do not suffer from friction.

Advantageously, said blade flexure extends substantially along said measurement axis when said force sensor assembly is in a neutral position.

Advantageously, at least one calibration mass is provided on said counterweight. By varying the mass of said calibration mass, the compensating system and end effector (considered together) can be calibrated to improve its equilibrium when subjected to accelerations, whether due to gravity or due to movement of the support.

Advantageously, said lever is adjustable in order to adjustably position said counterweight with respect to said pivot point. By varying the position of the counterweight with respect to the pivot point of the lever, the compensating system can be calibrated to improve the equilibrium of the compensating system and the end effector (considered together) when subjected to accelerations as above. This may be applied in combination with the at least one calibration mass.

Furthermore, the aim of the invention is attained in a second aspect of the invention by a torque sensor assembly as defined in a second independent claim. This torque sensor assembly comprises:
- a support adapted to be attached directly or indirectly to a frame;
- a torque sensor attached at a proximal end to said support and adapted to deform in response to a torque applied about a measurement axis;
- an end effector attached at a distal end of said sensor and adapted to come into contact with a test piece, said end effector having an inertia about said measurement axis and being formed so as to be able to interact with the test piece in a desired manner, e.g. comprising a probe surface, gripper, friction surface or similar;
- a compensating system comprising a counterinertia having a counterinertial inertia and supported directly or indirectly by said support so as to pivot about a counterinertia axis and being linked to said end effector by at least one inverter linkage, such as a rod, blade flexure or similar, arranged such that, when said end effector and said counterinertia are subjected to an angular acceleration about said measurement axis (i.e. with at least a component about this axis), the effect of said angular acceleration on said counterinertia applies a compensating torque to said end effector that is substantially equal magnitude and opposite direction to the torque applied by said acceleration directly to said end effector.

The effect of an angular acceleration due to motion of the support and/or of the frame on the end effector is hence cancelled out, and angular accelerations with a component about the measurement axis hence have substantially no effect on the torque measured by the torque sensor. The torque sensor assembly can hence be used in situations where it is subjected to angular accelerations, without having to compensate for their effect on the end effector by complex modelling.

Advantageously, said inverter linkage is attached to each of said counterinertia and to said end effector so as to cross a plane defined by said measurement axis and said counterinertia axis, i.e. a plane containing both of these axes.

Advantageously, said counterinertia is mounted on an extension fixed to said support.

Advantageously, said counterinertia axis is defined by a flexure pivot of any convenient form. Furthermore, said inverter linkage may comprise a blade flexure. Such arrangements are simple, require few components, and do not suffer from friction.

Advantageously, said blade flexure has a length direction extending substantially perpendicular to a plane defined by said measurement axis and said counterinertia axis, i.e. a plane containing both of these axes.

Advantageously, said counterinertia is provided with at least two diametrically-opposed calibration masses. By varying the mass of said calibration masses, the compensating system can be calibrated to improve the rotational equilibrium of the compensating system and end effector (considered together) when subjected to angular accelerations.

Advantageously, a distance from each of said calibration masses to said counterinertia axis is adjustable. By varying the position of the calibration masses with respect to said counterinertia axis, the compensating system can be calibrated to improve the rotational equilibrium of the compensating system and the end effector (considered together) when subjected to angular accelerations. This may be applied in combination with adjustable calibration masses.

### Brief description of the figures

Further details of the invention will become more apparent when reading the detailed description, in reference to the appended figures, which illustrate:
- Figure 1: schematic views of the issues associated with conventional force sensors, subjected to various forces and accelerations;
- Figure 2: schematic views of a force sensor according to the invention, subjected to various forces and accelerations;
- Figure 3: schematic views of a flexure implementation of the compensating system for a force sensor according to the invention, namely a side view and a vertical cutaway view on the plane of the line A-A;
- Figure 4: schematic lateral views of the pivot point (left) and linkage (right) of the embodiment of figure 3;
- Figure 5: a schematic view of the issues associated with conventional torque sensors;
- Figure 6A: schematic lateral and underside views of a torque sensor according to the invention, not subjected to any torque;
- Figure 6B: schematic lateral and underside views of the torque sensor of figure 6A, subjected to various torques;
- Figure 7: schematic views of a flexure implementation of the compensating system for a torque sensor according to the invention, namely a side view and a vertical cutaway view on the plane of the line B-B;
- Figure 8: enlarged sectional views of the flexures used in the implementation of figure 7, the section being taken on the plane of line B-B;
- Figure 9: partial schematic views of manners of calibrating the compensating system of the force sensor assembly of figure 2; and
- Figure 10: partial schematic underside views of manners of calibrating the compensating system of the torque sensor assembly of figures 6A and 6B.

### Embodiments of the invention

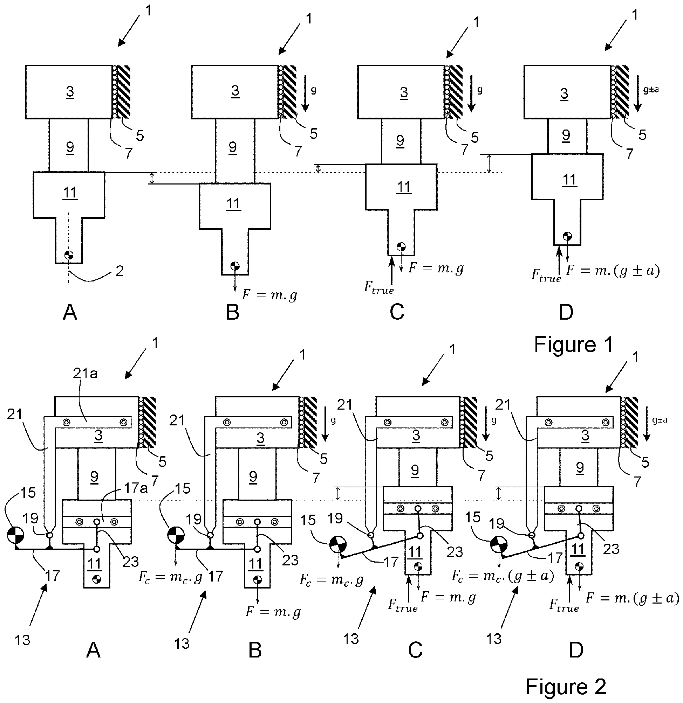

Figure 1 illustrates schematically a conventional force sensor assembly 1, as discussed in the preamble. This force sensor assembly 1 comprises a support 5, arranged to allow the assembly 1 to be mounted on a frame 5, of any convenient type (e.g. a robot arm, slide or similar). As illustrated, the frame 5 is mounted on the frame 5 via a sliding joint 7, but other types of joint, whether rigid, flexible, sliding or otherwise movable with respect to the frame 5.

Support 3 is attached at a proximal extremity of force sensor 9, and an end effector 11 is attached to the distal extremity of the force sensor 9, such that the force sensor 9 is sandwiched between the support 3 and the end effector 11. The end effector 11 is adapted to come in contact with, and interact with, a test piece, and to this end may have a probe surface, friction surface, gripper, pneumatic holder or any other convenient arrangement for interacting with the test piece. The end effector 11 may also have further functionality such as to grip and position a part (such as a bottle cap) on another object (such as a bottle). The end effector 11 has a mass m which is significant enough to affect the measurements made by the force sensor 9, this mass being indicated with a centre of mass symbol. If the end effector 11 also has said further functionality and carries a part during operation, the mass of this part may be taken into account when determining mass m, or may be ignored if it is insufficient.

Force sensor 9 is of the type which is adapted to lengthen and/or shorten in response to a force being applied thereto parallel to a measurement axis 2 (in the vertical direction on figure 1, only indicated on diagram A of figure 1 in order to avoid overloading figures 1 and 2), and may be based on one or more of a spring, a comb-type capacitive or electrostatic sensor, a piezoelectric sensor, or any other convenient type. The signal generated by the force sensor 9 can be transmitted as is generally known, e.g. via electrical contacts, optical means or similar (not illustrated).

Diagram A illustrates the assembly 1 in its neutral position, with no forces acting on the end effector 11, establishing a datum line.

Diagram B illustrates the assembly 1 with the end effector 11 oriented such that a gravitational force acts thereupon, parallel to the measurement axis 2, applying a force F *= m. g* to the end effector 11 and hence elongating the force sensor 9.

Diagram C illustrates the assembly oriented as in diagram B, with a contact force *Fₜᵣᵤₑ* being applied by the test piece to the **end** effector 11 in a direction opposite to the action of the gravity vector. The force sensor 9 hence is subject to a net force *Fₙₑₜ* which is *Fₙₑₜ = Fₜᵣᵤₑ* - *m. g.* The reading of the force sensor 9 is hence lower than the force *Fₜᵣᵤₑ* applied by contact with the test piece in the situation illustrated, and would be larger than *Fₜᵣᵤₑ* if this latter were applied in the opposite direction.

Finally diagram D illustrates the assembly as in diagram C, but also subject to a further acceleration *a* of the support 3 generating an inertial force *F =* m. *a* on the end effector 11, acting in the same direction as the gravity vector due to its influence on the inertia of the end effector 11, such that *Fₙₑₜ = Fₜᵣᵤₑ* - *m.* (*g* ± a).

It is clear from the foregoing that the compensating mechanism 13 does not negatively influence the measurement of *Fₜᵣᵤₑ* whether there are any accelerations to compensate or not.

The same principles apply when the acceleration vector *g* or *g* ± *a* is applied obliquely, its component parallel to the measurement axis 2 being considered in the above equations in such a case.

Figure 2 illustrates, in diagrams A to D which correspond to those of Figure 1, a force sensor assembly 1 according to the invention, provided with a compensating system 13, represented schematically with ideal kinematics.

Compensating system 13 comprises at least one counterweight 15, represented by a centre of mass symbol, which is arranged so as to act on said end effector 11 in an opposite direction to the mass of the end effector 11, when subjected to an acceleration, whether due to gravity or due to movement of the support 3 or frame 5. To this end, the counterweight 15 with a mass *m_{c}* is coupled to the end effector 11 by an inverter, illustrated here as a lever 17 pivotally mounted on a pivot point 19 fixed to the support 3 via an extension 21 attached to the support 21 by an extension mount 21a (only indicated with a reference sign on diagram A), the lever 17 being attached to the pivot point at a point intermediate between the attachment point of the lever 17 on the end effector 11 and the counterweight 15, and the lever 17 being pivotally mounted to the end effector 11 via a linkage 23 and a lever mount 17a, either directly by a simple pivot point or, as illustrated, via an intermediate bar or rod 23 with a corresponding pivot point at each end.

The counterweight 15 has a counterweight mass *m_{c}* chosen in relation to the mass of the end effector 11, taking into account the moment arm from the pivot point 19 to each of the effective mounting point of the end effector 11 and the counterweight 15 on the lever 17, such that, when the assembly 1 is subjected to an acceleration in the up/down direction on the figures, whether due to gravity or a dynamic acceleration, the counterweight 15 is subjected to a counterweight force *F_{c} = m_{c}.g* which, via the lever 17, applies a compensating force to the end effector 11 which is of substantially equal magnitude and opposite direction to the force F to that to which the end effector 11 itself is directly subject, in other words such that the net moment about the pivot point 19 is zero. Hence, if the moment arm of the force F is d, and the moment arm of the counterweight force *F_{c}* is *d_{c},* then *F.d = F_{c}.d_{c},* and m. *d.*(*g* ± *a*) *= m_{c}.d_{c}.*(*g* ± *a*), and the accelerations cancel such that the relationship simply becomes m. *d* = *m_{c}.d_{c},* Naturally, the mass of the lever 17 is taken into account in the determination of the effective counterweight mass *m_{c},* if required.

As a result, as can be seen from diagrams B-D on figure 2, said acceleration has no effect on the force sensor 9, which hence only measures *Fₜᵣᵤₑ.* Furthermore, the compensating system 13 does not negatively influence the force measurement.

If the compensating system 13 is symmetrised, i.e. the length of the moment arm from the pivot point to each of the counterweight 15 and the effective mounting point of the end effector 11 is the same on each side, the assembly 1 can also be made insensitive to angular accelerations.

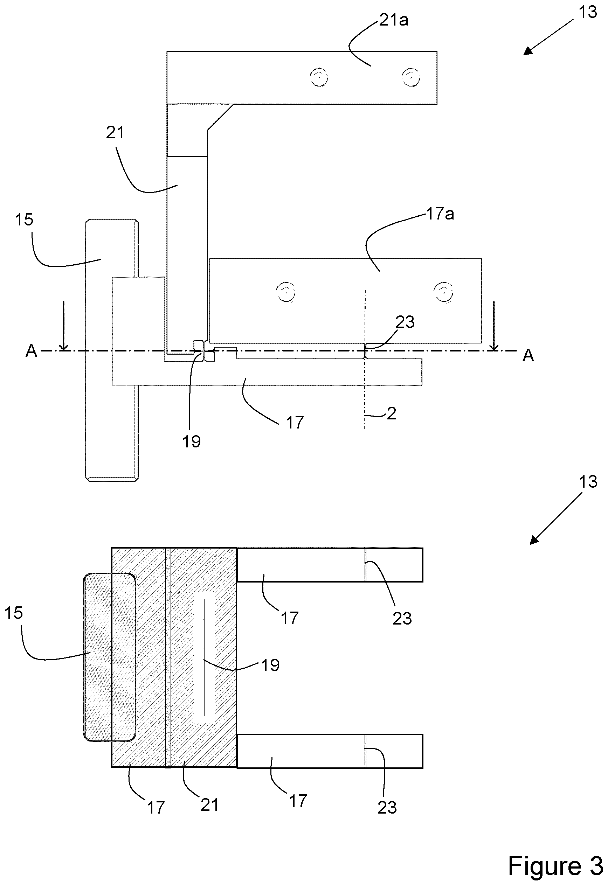

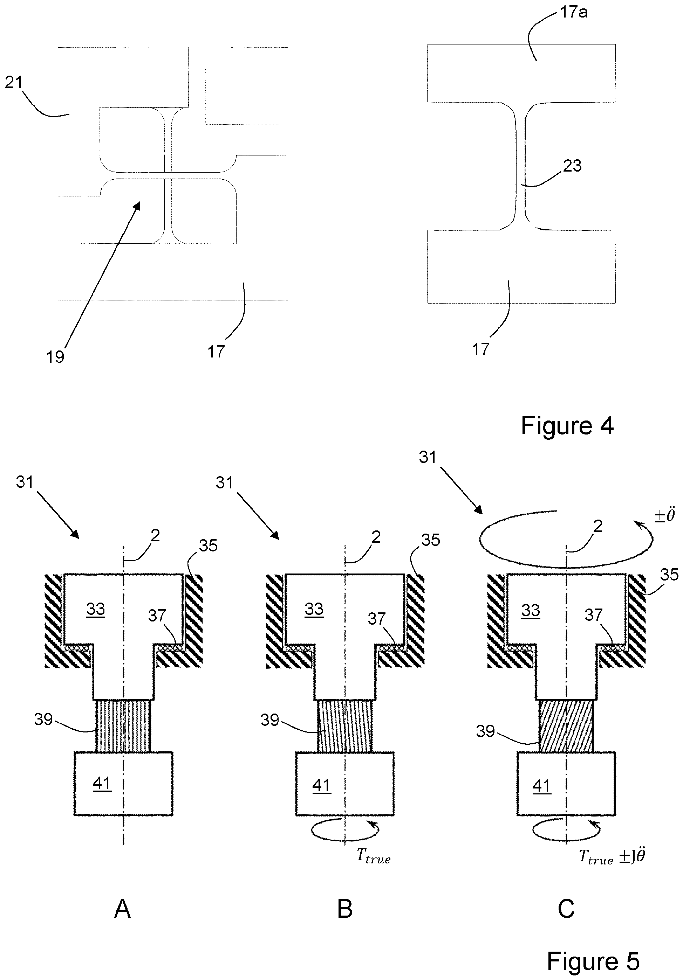

Figure 3 schematically represents a flexure-based implementation of the compensating system 13 of figure 2. The compensating system 13 comprises two parallel levers 17 extending from pivot point 19, and attached to the lever mount 17a by a pair of substantially identical linkages 23. Any convenient type of flexure pivot or pivots (e.g. a circular notch flexure hinge, elliptic notch flexure hinge, prismatic notch flexure hinge (leaf flexure hinge), separate cross blade flexure hinge, cartwheel flexure hinge (not separated cross blade flexure hinge), remote centre of compliance flexure hinge (RCC pivot), butterfly flexure hinge, Quadrivot or similar) may be used for the pivot point 19 and the linkages 23, however as illustrated in figure 4, the pivot point 19 advantageously is arranged as a crossed blade pivot extending parallel and perpendicular to the axis of the levers 17, and the linkage 23 is advantageously a simple leaf spring extending perpendicular to the axis of the levers 17 and along the measurement axis 2 when the compensating system 13 is in its neutral position..

Figure 5 illustrates, analogously to figure 1, the issues surrounding conventional torque sensor assemblies 31 when subjected to an angular acceleration *θ̈*.

Similarly to the force sensor assembly 1, the torque sensor assembly 31 comprises a support 33 mounted on a frame 35 and arranged to move in rotation with respect thereto via a rotationally-sliding joint 37 so as to pivot about a measurement axis 2.

Support 33 is attached at a proximal extremity of torque sensor 39, and an end effector 41 is attached at a distal end thereof such that the torque sensor 39 is sandwiched between the support 33 and the end effector 41. End effector 41 is again adapted to come in to contact with, and interact with, a test piece and to this end may have a probe surface, friction surface, gripper, pneumatic holder or any other convenient arrangement for interacting with the test piece. As before, the end effector 41 may also have further functionality such as to grip and position a part (such as a bottle cap) on another object (such as a bottle. End effector 41 has an inertia *J* about the measurement axis 2, which is significant enough to affect the measurements made by the torque sensor 39 in the case in which the support 33 is subjected to an angular acceleration *θ̈*. If the end effector 41 also has said further functionality and carries a part during operation, the inertia of this part may be taken into account when determining inertia *J*, or may be ignored if it is insufficient.

Torque sensor 39 is of the type where torsional deformation between its extremities is used to determine the level of torque applied, and to this end any convenient arrangement of such a torque sensor can be used, e.g. based on piezoelectric materials, capacitance, optical arrangements, torsional spring elements and so on. The same comments regarding transmission of the measurements apply as discussed above in the context of force sensor 9.

In diagram A, the torque sensor assembly 31 is at rest, and not subject to any applied torque or angular acceleration. In diagram B, the end effector 41 is subject only to a measured torque *Tₜᵣᵤₑ,* applied between the end effector 41 and the test piece (not illustrated). The torque sensor 39 will hence correctly read the measured torque *Tₜᵣᵤₑ.*

However, in diagram C, the angular acceleration *θ̈* to which the support 33 is subjected, whether this acceleration is generated by rotating the support 33 with respect to the frame 35 and/or by moving the frame 35 so as to generate an angular acceleration of the support 33, end effector 41 is subjected to an inertial acceleration ±*Jθ̈* such that the force sensor measures a net torque *Tₙₑₜ = Tₜᵣᵤₑ* ±*Jθ̈.*

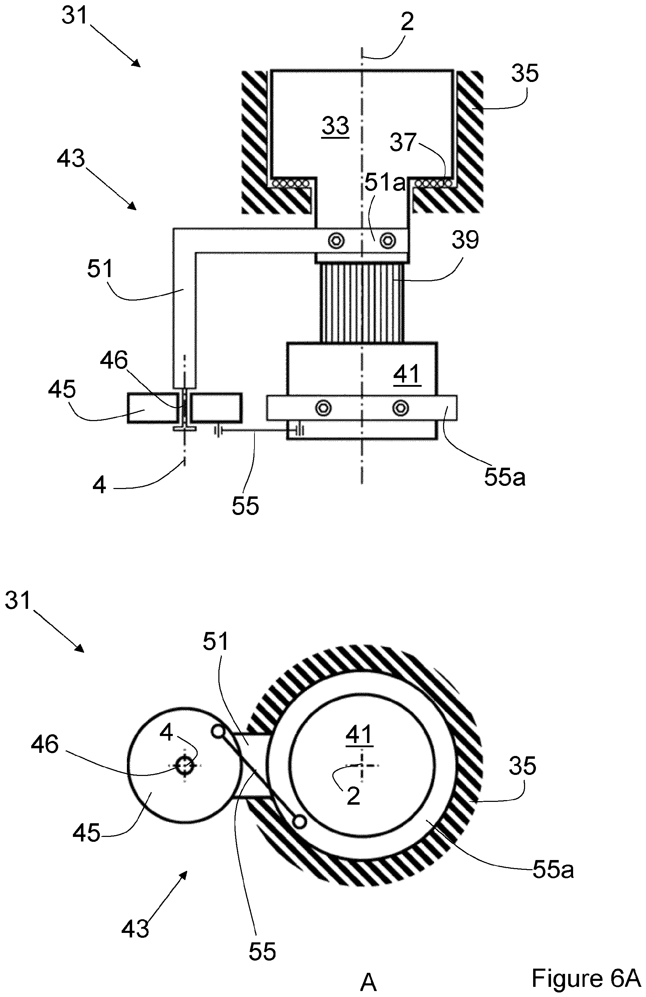

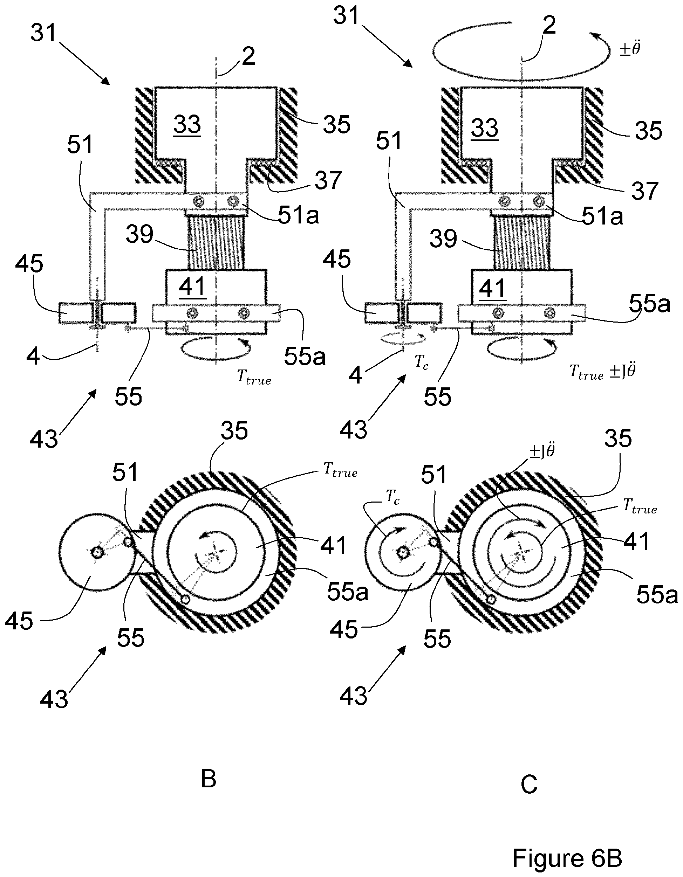

Figure 6A illustrates a torque sensor 31 according to the invention, provided with a compensating system 43 and not subjected to any torques. As illustrated, the compensating system 43 is shown with ideal kinematics.

Compensating system 43 comprises a counterinertia 45 having a counterinertial inertia *J_{c}* (the term "counterinertial inertia" simply referring to the inertia of the counterinertia 45 and being used interchangeably therewith) about its rotational axis 4 (also referred to as a "counterinertia axis 4"), arranged parallel to measurement axis 2. Counterinertia 45 is pivotally mounted on extension 51, which is fixed to the support 33 via extension mount 21a, the counterinertia 45 being mounted thereupon by a rotational bearing 46 (indicated with reference signs on figure 6A only) comprising e.g. a pin, stud, ball bearing, flexure pivot or any other convenient pivot defining counterinertia rotational axis 4.

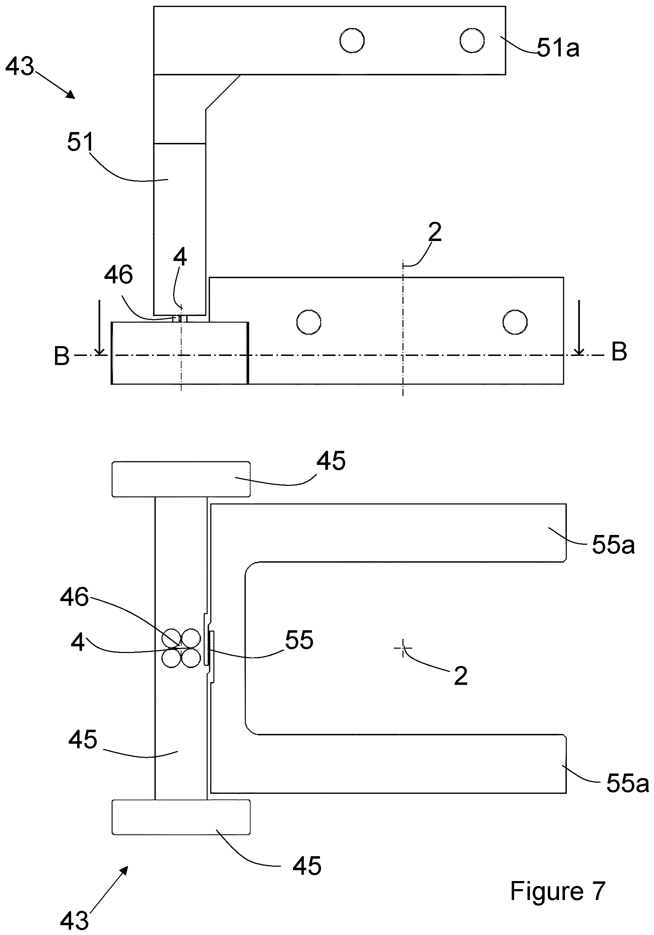

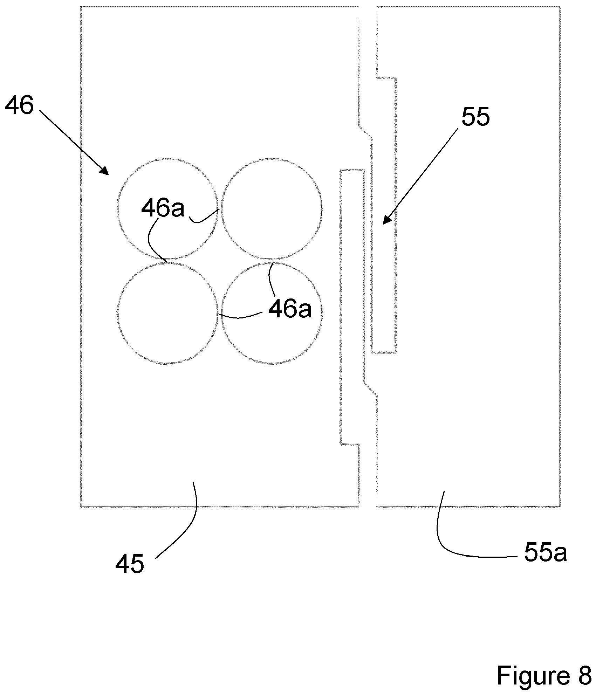

Counterinertia 45 is linked to the end effector 41 via an inverter linkage 55, one extremity of the inverter linkage 55 being pivotally mounted on the counterinertia 45, the other extremity of the inverter linkage 55 being pivotally mounted to the end effector 11, via an inverter linkage mount 55a, although it may be mounted directly thereto or otherwise mounted thereupon by any convenient arrangement. The points of attachment of the inverter linkage 55 to the counterinertia 45 and to the end effector 11 are chosen to be either side of a plane defined by axes 2 and 4 (i.e. a plane containing both these axes), such that a small-angle displacement of the end effector 11 in one direction of rotation induces a rotation of the counterinertia 45 in the opposite direction, and vice-versa. As illustrated, the inverter linkage 55 is a simple rod, with pin or ball joint pivots provided at convenient locations on the counterinertia 45 and the inverter linkage mount 55a. However, other arrangements are also possible, such as a blade flexure, as will become apparent below in the context of figures 7 and 8.

Diagram B of figure 6B illustrates the situation when the end effector 11 measures a torque *Tₜᵣᵤₑ* due to its interaction with the test piece, and as can be seen, the compensating system 43 does not negatively affect the measurement of this torque.

Diagram C of figure 6B illustrates the situation where the support 33 is subjected to an angular acceleration ±*θ̈*, whether due to the bearing 37 and/or angular acceleration of the support 35.

The inertia *J_{c}* of the counterinertia 45 and the geometry of the inverter linkage 55, namely the locations of its mounting points on the counterinertia 45 and end effector 41, are arranged so as to compensate the torque ±Jθ̈ engendered by an angular acceleration, as mentioned above. To this end, the compensating torque *T_{c}* that the angular acceleration ±*θ̈* engenders at the counterinertia 45 is arranged to be transmitted to the end effector 41 so as to have the magnitude *Jθ̈* but the opposite sign to that directly applied to the end effector 41 by said angular acceleration ±*θ̈*, which is hence cancelled out and the net torque *Tₙₑₜ = Tₜᵣᵤₑ.* The torque sensor 39 hence correctly measures the torque applied between the end effector 41 and the test piece.

Figure 7 illustrates a flexure implementation of a torque sensor assembly 31 as illustrated in figures 6A and 6B.

In the nonlimiting embodiment of figure 7, the rotational bearing 46 defining axis 4 is implemented as a rotationally-symmetric flexure pivot comprising four notch-type flexures 46a (see figure 8) arranged in opposed pairs, one end of which is attached to the extension 51, and the other end of which is attached to the counterinertia 45, formed in a "dumbbell" configuration of two masses joined by a substantially-rigid bar.

The counterinertia 45 is joined to inverter linkage mount 55a, which is formed as a pair of rigidly-joined flanges adapted to be secured to an end effector, via an inverter linkage 55 configured as a blade flexure. This blade flexure is aligned with its width (i.e. its shortest dimension) in a direction in the plane containing axes 2 and 4, and its length (i.e. its longest dimension) in a direction perpendicular to the plane containing axes 2 and 4, the blade flexure passing through this plane at a predetermined point between axes 2 and 4.

As a result, a rotation of the inverter linkage mount 55a in the anticlockwise direction around axis 2 causes a rotation of the counterinertia 45 in the clockwise direction around axis 4, and vice-versa.

In both the case of a force sensor 1 or a torque sensor 31 according to the invention, it may be the case that errors occur due to the uncertainty of the mass *m_{c}* of the counterweight 15 or the inertia *J_{c}* of the counterinertia 45 as appropriate. As a result, it may be desirable to be able to calibrate the action of the counterweight 15 or counterinertia 45 in order to balance the compensation system 13, 43.

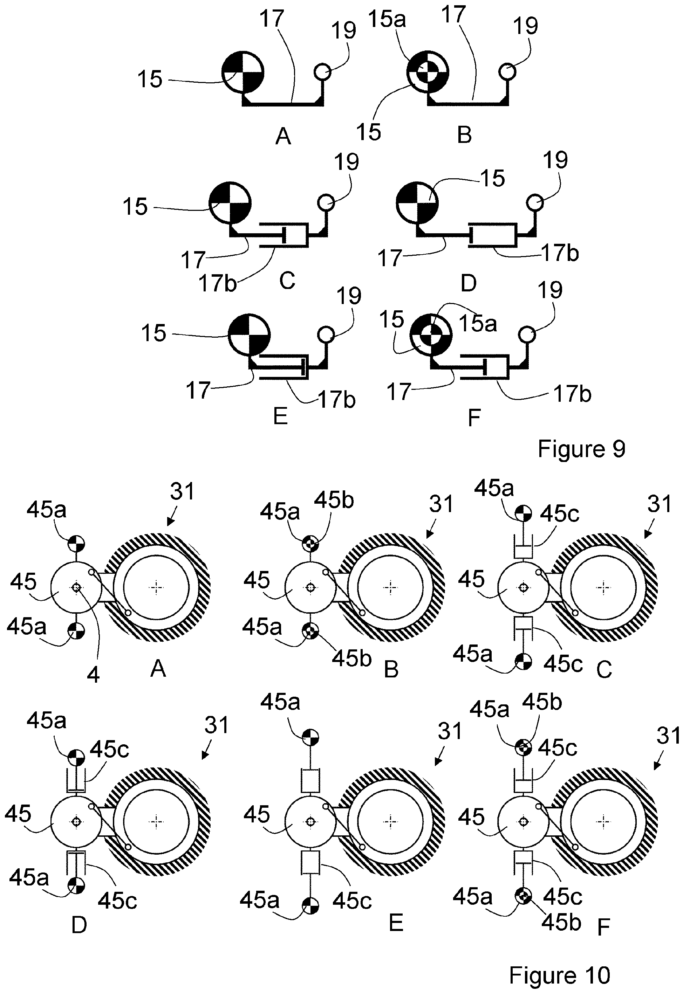

To this end, figure 9 illustrates the portion of the lever 17 situated on the counterweight 15 side of the pivot point 19, together with these latter two elements. Diagram A of this figure corresponds to the arrangement of figure 2. Diagram B illustrates the addition of a calibration mass 15a to the counterweight 15, in order to adjust the moment applied to the lever 17 by the effect of accelerations on the counterweight 15 by choosing an appropriate mass. Diagrams C-E illustrate the lever 17 being provided with an adjustment mechanism 17b arranged to permit the distance of the counterweight 15 from the pivot point 19 to be adjusted, and hence to adjust the torque applied to the lever 17 by the effect of accelerations on the counterweight 15. Adjustment mechanism 15b is illustrated in various adjustment positions and may be adjustable in a discrete (e.g., multistable mechanism, ratchet mechanism, etc.) or a continuous manner (e.g., slider actuated by a screw). Diagram F shows the combination of the two measures, i.e. an additional calibration mass 15 and an adjustment mechanism 15b applied simultaneously.

Figure 10 illustrates similar principles applied to the torque sensor 31 of figures 6A and 6B, upon which not all the reference signs have been mentioned, in order to avoid overloading the figures. In diagram A of this figure, counterinertia 45 is provided with a pair of diametrically-opposed calibration masses 45a. In diagram B, the calibration masses 45a are provided with further, smaller calibration masses 45b analogous to calibration masses 15b are provided, and their masses can be varied not only to obtain the desired value of counterinertial inertia *J_{c},* but also to adjust the centre of mass such that it is properly centred on axis 4 (only indicated on diagram A).

In diagrams C, D and E, the calibration masses 45a are provided on arms with adjustment mechanisms 45c in order to adjust the distance between the calibration masses 45a and the axis 4 so as to increase or decrease the counterinertial inertia *J_{c}*, and/or to ensure that the centre of mass is properly centred on axis 4. The same considerations as in respect of adjustment mechanism 17b apply equally to adjustment mechanisms 45c. Finally, in diagram F, both calibration systems are applied simultaneously.

Although the invention has been described in terms of specific embodiments, variations thereto are possible, without departing from the scope of the invention as defined in the appended claims.

## Claims

1. Force sensor assembly (1) comprising :
- a support (3) adapted to be attached to a frame (5);
- a force sensor (9) attached at a proximal end to said support (3) and adapted to deform in response to a force applied along a measurement axis (2);
- an end effector (11) attached at a distal end of said force sensor (9) and adapted to come into contact with a test piece, said end effector (11) having a mass (m);
- a compensating system (13) comprising a counterweight (15) having a counterweight mass (*m_{c}*) supported by said support (3) and linked to said end effector (11) by at least one lever (17) pivotally mounted on said support (3) at a pivot point (19) intermediate between said counterweight (15) and a point at which said lever (17) is connected to said end effector (11), said compensating system (13) being arranged such that, when said end effector (11) and said counterweight (15) are subjected to an acceleration (g, *a*) parallel to said measurement axis (2), the effect of said acceleration (g, *a*) on said counterweight (15) applies a compensating force to said end effector (11) that is substantially of equal magnitude and opposite direction to the force applied by said acceleration (g, *a*) directly to said end effector (11).

2. Force sensor assembly (1) according to the preceding claim, wherein said lever is (17) pivotally mounted on an extension (21) fixed to said support (3).

3. Force sensor assembly (1) according to any preceding claim, wherein said lever (17) is pivotally mounted on said extension (21) by at least one flexure pivot (19), preferably a crossed blade flexure pivot.

4. Force sensor assembly (1) according to any preceding claim, wherein said lever 17) is connected to said end effector (11) by at least one blade flexure (23).

5. Force sensor assembly (1) according to the preceding claim, wherein said blade flexure (23) extends substantially along said measurement axis (2) when said force sensor assembly (1) is in a neutral position.

6. Force sensor assembly (1) according to any preceding claim, further comprising at least one calibration mass (15a) provided on said counterweight (15).

7. Force sensor assembly (1) according to any preceding claim, wherein said lever (17) is adjustable in order to adjustably position said counterweight (15) with respect to said pivot point (19).

8. Torque sensor assembly (31) comprising :
- a support (33) adapted to be attached to a frame (35);
- a torque sensor (39) attached at a proximal end to said support (33) and adapted to deform in response to a torque applied about a measurement axis (2);
- an end effector (41) attached at a distal end of said torque sensor (39) and adapted to come into contact with a test piece, said end effector (11) having an inertia *J* about said measurement axis 2;
- a compensating system (43) comprising a counterinertia (45) having a counterinertial inertia (*J_{c}*) and being supported by said support (33) so as to pivot about a counterinertia axis (4) and linked to said end effector (41) by at least one inverter linkage (55) arranged such that, when said end effector (41) and said counterinertia (45) are subjected to an angular acceleration (*θ̈*) about said measurement axis (2), the effect of said acceleration on said counterinertia (45) applies a compensating torque to said end effector (41) that is of substantially equal magnitude and opposite direction to the torque applied by said angular acceleration (*θ̈*) directly to said end effector (41).

9. Torque sensor assembly (31) according to claim 8, wherein said inverter linkage (55) is attached to each of said counterinertia (45) and to said end effector (41) so as to cross a plane defined by said measurement axis (2) and said counterweight axis (4).

10. Torque sensor assembly (31) according to one of claims 8 or 9, wherein said counterinertia (45) is mounted on an extension (51) fixed to said support (33).

11. Torque sensor assembly (31) according to one of claims 8-10, wherein said counterinertia axis (4) is defined by a flexure pivot (46).

12. Torque sensor assembly (31) according to one of claims 8-11, wherein said inverter linkage (55) comprises a blade flexure.

13. Torque sensor assembly (31) according to the preceding claim, wherein said blade flexure has a length direction extending substantially perpendicular to a plane defined by said measurement axis (2) and said counterinertia axis (4).

14. Torque sensor assembly (31) according to one of claims 8-13, wherein said counterinertia (45) is provided with at least two diametrically-opposed calibration masses (45a, 45b).

15. Torque sensor assembly (31) according to the preceding claim, wherein a distance from each of said calibration masses (45a, 45b) to said counterinertia axis (4) is adjustable.
